# EUROPÄISCHE PATENTANMELDUNG

(11) **EP 2 522 446 A1**
(43) Veröffentlichungstag der Anmeldung: **14.11.2012**
(21) Anmeldenummer: 12167458.4
(22) Anmeldetag: 10.05.2012
(51) Int. Cl.: B22F 3/105, B29C 67/00

(54) **Vorrichtung zur aufeinander folgenden Herstellung von Formkörpern durch schichtweises Aufbauen aus Werkstoffpulver**

(30) Priorität: 12.05.2011 DE 102011075748
(71) Anmelder: Fockele, Matthias, 33178 Borchen (DE)
(72) Erfinder: Fockele, Matthias, 33178 Borchen (DE)
(74) Vertreter: Tiesmeyer, Johannes

(57) **Zusammenfassung**

Vorgeschlagen wird eine Vorrichtung zur Herstellung von Formkörpern (23) durch schichtweises Aufbauen aus Werkstoffpulver durch ortsselektives Verfestigen des Pulvers zu zusammenhängenden Bereichen nach Maßgabe von Geometriebeschreibungsdaten des Formkörpers (23), umfassend
- einen Prozessraum (9) mit einem Prozessraumboden, der eine Basisebene (11) und eine relativ dazu mittels einer steuerbaren Antriebseinheit längs einer vertikalen Bauplattformachse gesteuert höhenverstellbare Bauplattform (13),
- mehrere aufeinander gestapelte Substratplatten (25), die auf der Bauplattform (13) angeordnet sind,
- eine Pulverschichtenpräparierungseinrichtung zur Präparierung einer jeweiligen nachfolgend ortsselektiv zu verfestigenden Pulverschicht (21) auf der obersten der gestapelten Substratplatten (25),
- eine Pulververfestigungseinrichtung, die zum ortsselektiven Verfestigen von Pulver der jeweils zuletzt auf der obersten der gestapelten Substratplatten (25) präparierten Pulverschicht (21) aktivierbar ist, und
- eine Substratplattentransporteinrichtung (69), die im Prozessraum (9) bewegbar ist, um nach Fertigstellung des Formkörpers (23) die oberste der gestapelten Substratplatten (25) zusammen mit dem Formkörper (23) von der Bauplattform (13) wegzubewegen.

## Beschreibung

Die Erfindung betrifft eine Vorrichtung zur Herstellung von Formkörpern durch schichtweises Aufbauen aus Werkstoffpulver durch ortsselektives Verfestigen des Pulvers zu zusammenhängenden Bereichen nach Maßgabe von Geometriebeschreibungsdaten des Formkörpers, umfassend
- einen Prozessraum mit einem Prozessraumboden, der eine Basisebene und eine relativ dazu mittels einer steuerbaren Antriebseinheit längs einer vertikalen Bauplattformachse gesteuert höhenverstellbare Bauplattform für den Formkörper aufweist,
- eine Pulverschichtenpräparierungseinrichtung zur Präparierung einer jeweiligen nachfolgend ortsselektiv zu verfestigenden Pulverschicht auf einer oberen Substratplatte der Bauplattform,
- eine Pulververfestigungseinrichtung, die zum ortsselektiven Verfestigen von Pulver der jeweils zuletzt auf der Substratplatte präparierten Pulverschicht aktivierbar ist.

Derartige Vorrichtungen zur Herstellung von Formkörpern sind in diversen Ausgestaltungen bekannt. Grundsätzliche Unterschiede bekannter Vorrichtungen dieser Art ergeben sich aus der Wirkungsweise der Pulververfestigungseinrichtung. So gibt es Vorrichtungen, bei denen die Pulververfestigung durch ortsselektives Aufbringen eines Bindemittels oder chemischen Reaktants auf die jeweils zuletzt auf der Bauplattform präparierte Pulverschicht erfolgt, um diese an den betreffenden Stellen zu zusammenhängenden Bereichen zu verfestigen, die sich mit entsprechend verfestigten Bereichen an der jeweils darunter liegenden Schicht verbinden.

Als besonders interessant hat sich jedoch in den letzten Jahren ein anderes Arbeitsprinzip beim ortsselektiven Verfestigen von Pulver herausgestellt, nämlich das Verfestigen durch Umschmelzen oder ggf. durch Sintern des Pulvers durch Energieeintrag durch Strahlung, insbesondere Laserstrahlung. Die Arbeitsweise des Umschmelzens des Pulvers wird in der vorliegenden Anmeldung als selektives Laserschmelzen bezeichnet. Das selektive Laserschmelzen wird eingesetzt, um Formkörper aus metallischen Pulvern oder/und keramischen Pulvern herzustellen. Die dazu verwendeten Vorrichtungen werden auch als SLM-Vorrichtungen bezeichnet und sind in diversen Varianten bekannt, so z. B. aus der DE 10 2004 041 633 A1, der DE 102 36 907 A1, der DE 199 05 067 A1, der DE 10 112 591 A1 oder der W098/ 24574 A1. Diese SLM-Vorrichtungen werden benutzt, um einen Formkörper entsprechend Geometriedaten, insbesondere CAD-Daten, des Formkörpers durch schichtweises Aufbauen aus pulverförmigem, metallischem oder keramischem Werkstoff herzustellen, wobei nacheinander mehrere Pulverschichten übereinander aufgebracht werden und jede Pulverschicht vor dem Aufbringen der nächstfolgenden Pulverschicht mit einem fokussierten Laserstrahl in einem vorgegebenen Bereich, der einem ausgewählten Querschnittsbereich des Formkörpers entspricht, erhitzt wird. Der Laserstrahl wird dabei jeweils entsprechend den CAD-Querschnittsdaten des ausgewählten Querschnittsbereichs des Formkörpers oder daraus abgeleiteter Daten über die jeweilige Pulverschicht geführt. Durch den Energieeintrag der Laserstrahlung wird das Werkstoffpulver im Bereich der Auftreffstelle des Laserstrahls ortsselektiv umgeschmolzen, so dass zusammenhängende Bereiche möglichst homogen umgeschmolzenen Materials in der jeweiligen Schicht entstehen. Übereinander liegende umgeschmolzene Bereiche zweier aufeinander folgender Schichten verbinden sich, so dass der Formkörper Schicht für Schicht zusammenhängend entsteht.

Die Präparation einer jeweils neuen Pulverschicht auf der Bauplattform sollte möglichst wenig Zeit beanspruchen, damit der Bauprozess des Formkörpers insgesamt möglichst schnell erfolgen kann. Um diesen Anforderungen zu genügen, nämlich dem raschen Herstellen einer homogenen ebenen Pulverschicht der gewünschten Pulverschichtdicke, sind verschiedene Schichtenpräparierungseinrichtungen vorgeschlagen worden.

Bei der aufeinander folgenden Herstellung mehrerer Formkörper durch schichtweises Aufbauen aus Werkstoffpulver sollte nach Fertigstellung eines Formkörpers, ungeachtet des zum Einsatz kommenden Pulververfestigungs-oder Schichtenpräparierungsprinzips, der folgende Herstellungsvorgang des nächsten Formkörpers möglichst ohne lange Unterbrechung gestartet werden können. Hierzu muss der fertiggestellte Formkörper rasch von der Bauplattform entfernt werden und der zum Einsatz kommenden Pulververfestigungs- und Schichtenpräparierungsvorgang für den schichtweisen Aufbau des nächsten Formkörpers schnell ermöglicht werden.

Der vorliegenden Erfindung liegt die Aufgabe zugrunde, eine Vorrichtung der eingangs genannten Art bereitzustellen, welche eine serielle Herstellung mehrerer Formkörper ermöglicht, ohne lange Umrüstpausen zwischen den Bauprozessen aufeinander folgend herzustellender Formkörper zu erfordern.

Diese Aufgabe wird erfindungsgemäß dadurch gelöst, dass eine Vorrichtung der eingangs genannten Art mit mehreren auf der Bauplattform aufeinander (ggf. mit Zwischenlagen) gestapelten Substratplatten und einer Substratplattentransporteinrichtung ausgestattet wird, wobei die Substratplattentransporteinrichtung im Prozessraum bewegbar ist, um nach Fertigstellung eines Formkörpers auf der obersten der gestapelten Substratplatten die oberste Substratplatte zusammen mit dem Formkörper von der Bauplattform wegzubewegen. Unmittelbar nach Wegbewegung der obersten Substratplatte zusammen mit dem Formkörper kann der nächste Formkörper durch schichtweises Aufbauen aus Werkstoffpulver auf der nächsten auf der Bauplattform zuoberst liegenden Substratplatte hergestellt werden. Dieser einfache Aufbau der erfindungsgemäßen Vorrichtung kann die Herstellung aufeinander folgender Formkörper durch schichtweises Aufbauen aus Werkstoffpulver rasch und unkompliziert ermöglichen. Dabei ist es bevorzugt vorgesehen, dass die erfindungsgemäße Vorrichtung dazu eingerichtet ist, dass sie mehrere Formkörper nacheinander automatisch aufbaut, ohne dass ein Eingriff durch eine Bedienungsperson erforderlich ist. Dieser automatische Betrieb kann die Handhabung und Wiederaufbereitung des überschüssigen Pulvers und ggf. bedarfsweises Zuführen von neuem Pulver einschließen, so dass stets soviel Pulver zur Verfügung steht, wie im jeweiligen Bauprozess aktuell benötigt wird.

Die Substratplatten können in ihrer Position auf der Bauplattform lösbar gesichert sein, insbesondere verdrehgesichert, damit sie während des Bauprozesses eines Formkörpers ihre jeweilige Sollposition präzise einhalten können. So kommen auch Substratplatten in Polygonform, insbesondere Rechteckform in Frage, die in entsprechenden konturierten Führungen auf der Bauplattform liegen. Auch magnetische Positionssicherungen der Substratplatten können vorgesehen sein. Gemäß einer Ausführungsform haben die Substratplatten schwach gewölbte Erhebungen und komplementäre Einbuchtungen an der Oberseite und an der Unterseite, so dass bei unmittelbar benachbart aufeinander liegenden Substratplatten Einbuchtungen der einen Substratplatte mit Erhebungen der anderen Substratplatte in Eingriff stehen, wobei auf diese Weise eine Positionssicherung der gestapelten Substratplatten auf der Bauplattform erzielt wird. Da die Wölbungen der Erhebungen/Einbuchtungen schwach sind, ist es aber leicht möglich, die jeweils oberste Substratplatte nach entsprechendem Anheben der Bauplattform seitlich von den anderen Substratplatten des Stapels zu verschieben.

Die Substratplattentransporteinrichtung umfasst in einer besonders bevorzugten Ausführungsform einen Substratplattenschieber, der zwischen zwei Umkehrstellen hin- und herbewegbar ist. Durch die Möglichkeit der Hin- und Herbewegung des Substratplattenschiebers kann der Prozessraumbodenbereich für das Transportieren des fertiggestellten Formkörpers sehr klein und gut abgegrenzt gehalten werden. Es wird auch bevorzugt, die Unterseite des Substratplattenschiebers im Wesentlichen auf der Höhe der Basisebene anzuordnen, um nach Fertigstellung des Formkörpers die oberste der gestapelten Substratplatten zusammen mit dem Formkörper von der Bauplattform wegzuschieben.

Der Substratplattenschieber kann einen bewegbar geführten Arm mit einer vertikalen Rotationsachse aufweisen, wobei der Substratplattenschieber um die vertikale Rotationsachse bewegbar ist.

In alternativen Ausführungsformen kommen linear bewegbare Substratplattenschieber in Frage. Die Substratplattentransporteinrichtung kann alternativ oder zusätzlich einen Bedienungsroboter im Prozessraum umfassen, wobei vorzugsweise dieser Roboter ggf. auch zusätzliche Aufgaben erledigen kann.

Es wird auch bevorzugt, dass die Bauplattform so höhenverstellbar ist, dass die Unterseite der obersten auf der Bauplattform gestapelten Substratplatten im Wesentlichen auf der Höhe der Basisebene des Prozessraumbodens angeordnet ist. Somit kann beispielsweise ein Substratplattenschieber mit im Wesentlichen auf der Höhe der Basisebene angeordneter Unterseite auf eine einfache Art und Weise die oberste der gestapelten Substratplatten zusammen mit dem fertiggestellten Formkörper von der Bauplattform wegschieben, ohne dabei die restlichen auf der Bauplattform gestapelten Substratplatten mitzubewegen.

In Bezug auf die Problematik eines möglichst sauberen Pulver-Handlings im Prozessraum wird bevorzugt, dass die Substratplattentransporteinrichtung eine Pulverabsaugeinrichtung zur Absaugung von überschüssigem Pulver von der obersten der gestapelten Substratplatten aufweist, wenngleich alternativ oder zusätzlich eine gesonderte Pulverabsaugeinrichtung vorgesehen sein kann. Es wird ferner bevorzugt, dass die Absaugeinrichtung eine Saugglocke oder Absaughaube umfasst, die im Prozessraum über die Bauplattform bewegbar ist und die über Absaugleitungen mit einem externen Sammelbehälter verbunden ist. Zum Absaugen kann eine Pumpe aktiviert werden, welche den erforderlichen Unterdruck in der Saugglocke erzeugt und das Pulver über die Absaugleitungen absaugt. Die Saugglocke bzw. Absaughaube ist vorzugsweise auch an einer Gaszuführungsleitung angeschlossen, welche vorzugsweise Schutzgas, z. B. Argon zuströmen lässt, und zwar so, dass der Gasstrahl eine Pulverauflockerung des abzusaugenden Pulvers bewirken kann. Diese Gaszufuhr kann kontinuierlich während des Absaugvorgangs erfolgen oder ggf. auch stoßweise intermittierend. Das Innenvolumen der Saugglocke bzw. Absaughaube kann im Vergleich mit dem Innenvolumen des Prozessraumes normalerweise klein gehalten werden.

Wie schon angesprochen, kann auch eine Pulverauflockerungseinrichtung vorgesehen sein, um das abzusaugende Pulver auf der obersten der gestapelten Substratplatten aufzulockern. Die Pulverauflockerungseinrichtung kann z. B. eine Vibrations-, Ultraschall- oder Gebläseeinrichtung umfassen.

Nach Beendigung eines Absaugvorgangs sollte der hergestellte Formkörper von überschüssigem Pulver an seiner Außenseite weitestgehend befreit sein.

Im Prozessraum kann ein zusätzlicher Vorrat an Substratplatten bereitliegen, wobei eine oder mehrere Substratplatten aus dem Vorrat auf die Bauplattform zubewegt werden können, um die Bauplattform für die Herstellung weiterer Formkörper mit neuen Substratplatten aufzufüllen bzw. nachzuladen. Es wird auch bevorzugt, dass die Substratplattentransporteinrichtung so bewegbar ist, dass eine oder mehrere Substratplatten als Nachschub aus dem Vorrat auf die Bauplattform zubewegt werden. Der Vorrat an Substratplatten kann auf einer dafür vorgesehenen Vorratsfläche des Prozessraumbodens bereitgelegt sein.

Es wird ferner bevorzugt, dass die Substratplattentransporteinrichtung relativ zu dem Prozessraumboden gesteuert höhenverstellbar ist. Durch die Möglichkeit des Anhebens und Absenkens der Substratplattentransporteinrichtung, insbesondere in Kombination mit der Möglichkeit der Hin- und Herbewegung des Substratplattenschiebers, kann der Prozessraumbodenbereich für das Transportieren des fertiggestellten Formkörpers sehr klein und gut abgegrenzt gehalten werden. Dabei ist dafür Sorge zu tragen, dass der Substratplattenschieber ausreichend nahe an die Basisebene des Prozessraumbodens herangeführt ist, wenn nach Fertigstellung des Formkörpers die oberste der gestapelten Substratplatten zusammen mit dem Formkörper von der Bauplattform wegbewegt werden sollen.

Gemäss einer Weiterbildung der Erfindung ist ein mechanischer Antrieb oder/und pneumatischer oder/und elektromagnetischer oder/und hydraulischer Stellantrieb für die gesteuerte Bewegung der Substratplattentransporteinrichtung vorgesehen.

Ausführungsbeispiele der Vorrichtung nach der Erfindung werden im Folgenden unter Bezugnahme auf die Figuren näher erläutert.

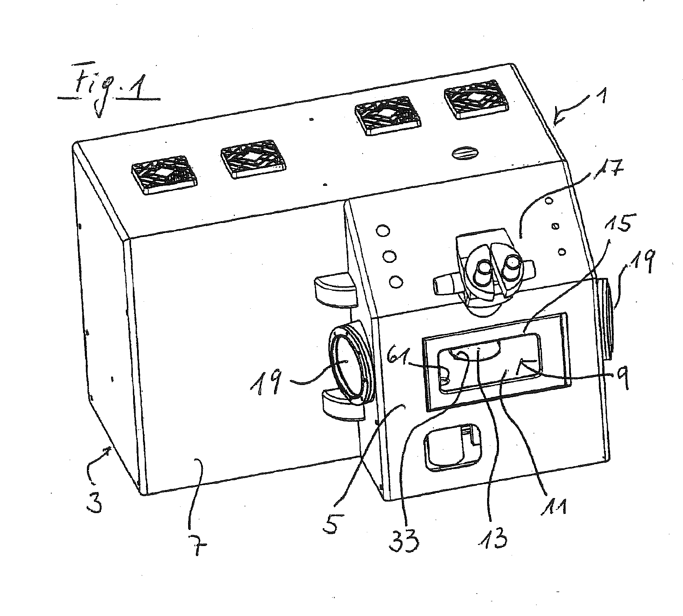

- Fig. 1: zeigt in einer Perspektivdarstellung eine SLM-Vorrichtung nach der Erfindung in Außenansicht.

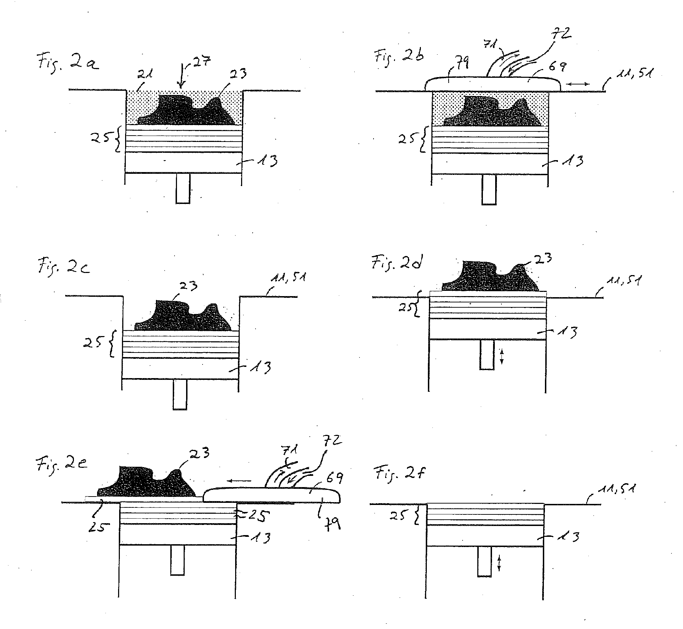

- Fig. 2a-2f: zeigen in grob schematischer Weise eine Momentaufnahme während des Vorgangs der Absaugung von überschüssigem Pulver von der obersten der gestapelten Substratplatten und das Hinwegbewegen der obersten der gestapelten Substratplatten (25) zusammen mit dem Formkörper (23) von der Bauplattform (13) nach Fertigstellung des Formkörpers.

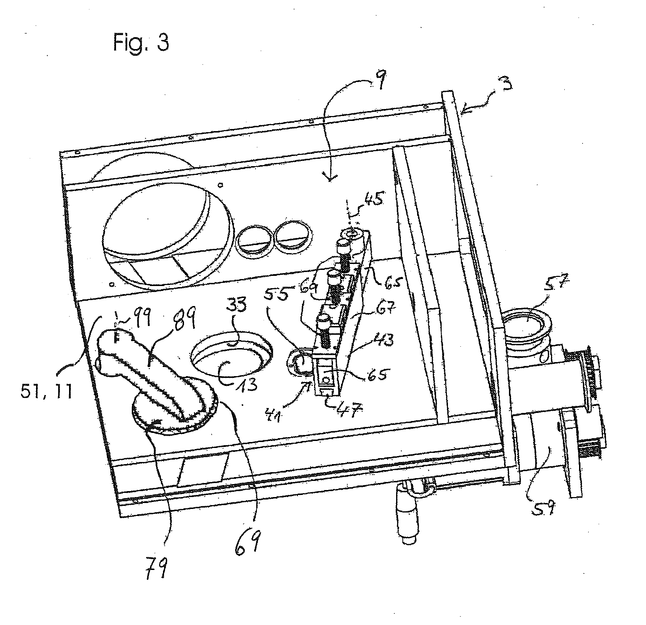

- Fig. 3: zeigt in einer perspektivischen Darstellung das Prozessraumabteil der Vorrichtung aus Fig. 1 in einem weitgehend auseinander gebauten Zustand, um den Blick auf eine Schichtenpräparierungseinrichtung und Substratplattentransporteinrichtung freizugeben, die in den Fig. 2a - 2f in unterschiedlichen Einstellungen gezeigt ist.

Fig. 1 zeigt als Beispiel für eine SLM-Vorrichtung ein SLM-Tischgerät, welches z. B. zur Herstellung von Zahnersatzteilen, Schmuck, kleinen Maschinenteilen usw. verwendet werden kann und insbesondere auch für den Bereich der Erforschung von Vorgängen beim selektiven Laserschmelzen (SLM) oder ggf. beim selektiven Lasersintern (SLS) geeignet ist.

Die SLM-Vorrichtung 1 weist ein Gehäuse 3 mit einem Prozessraumabteil 5 und einem Versorgungsabteil 7 auf. In dem Prozessraumabteil 5 befindet sich der Prozessraum 9 mit seinem Prozessraumboden 11 und der darin eingelassenen Bauplattform 13, wie dies durch das Sichtfenster 15 in der vorderen Gehäusewand des Prozessraumabteils 5 zu erkennen ist. Ein Stereomikroskop 17 kann genutzt werden, um den SLM-Bauprozess zu beobachten und/oder die Einstellung bestimmter Parameter, wie z. B. die Fokaleinstellung des verwendeten Laserstrahls zu prüfen. In den einander entgegengesetzten Seitenwänden des Prozessraumabteils 5 sind Durchgriffsöffnungen 19 vorgesehen, die von einem daran vorgesehenen Durchgriffshandschuh (nicht erkennbar) nach außen hin abgedichtet sind. Das Prozessraumabteil 5 ist somit als Handschuhbox ausgebildet und erlaubt den manuellen Zugriff auf Komponenten in dem Prozessraum 9 von außen her. Während des Bauprozesses eines Formkörpers herrscht in dem Prozessraum 9 vorzugsweise Schutzgasatmosphäre.

In dem Versorgungsabteil 7 sind unter anderem Komponenten für die Schutzgasversorgung, Komponenten der elektronischen Steuerung des Gerätes sowie elektrische Komponenten vorgesehen.

In Fig. 2a ist in einer grob schematischen Weise eine Momentaufnahme während der Bestrahlung einer zuletzt auf der Bauplattform 13 präparierten Pulverschicht 21 dargestellt. Es sind mehrere aufeinander gestapelte Substratplatten 25 auf der Bauplattform 13 angeordnet. Ausgehend von einer ersten Pulverschicht, die auf der obersten der Substratplatten 25 präpariert worden ist, hat der Bauprozess des Formkörpers 23 begonnen und ist dann Schicht für Schicht bis zu der in Fig. 2a angedeuteten Momentaufnahme fortgesetzt worden. Das verwendete Pulver ist z. B. Metallpulver oder ggf. Keramikpulver. Nach der Präparation einer jeweiligen Pulverschicht auf der Bauplattform 13 wird diese mittels eines Laserstrahls 27 ortsselektiv an den Stellen bestrahlt, an denen das Pulver zu zusammenhängend verfestigten Bereichen umgeschmolzen werden soll. Der Laserstrahl 27 tastet die aktuell zu bestrahlende Schicht 21 in gesteuerter Weise ab, wobei hierzu z. B. ein X-Y-Galvanoscanner zum Einsatz kommt. Weiterhin steuert die Steuereinrichtung die Einschalt-/Ausschaltphasen des Laserstrahls 27.

Fig. 2b zeigt schematisch, wie nach Fertigstellung eines Formkörpers 23 eine Substratplattentransporteinrichtung 69 mit einer Pulverabsaugeinrichtung in Form einer Pulverabsaugglocke über die Bauplattform 13 bewegt wird und im Wesentlichen bündig mit der Basisebene 51 des Prozessraumbodens 11 liegt. Das den Formkörper 23 außen umgebende überschüssige Pulver kann so effizient abgesaugt werden. Dies erfolgt über die Absaugleitung 71, die an einer Absaugpumpe angeschlossen ist. Das abgesaugte Pulver gelangt in eine Siebvorrichtung. Das gesiebte Pulver gelangt dann in einen Vorratsbehälter zur Wiederverwendung. Mit 72 ist in den Fig. 2b und 2e eine Gaszuführungsleitung zu der Pulverabsaugglocke 79 bezeichnet. Die Gaszuführungsleitung 72 liefert Schutzgas in die Saugglocke, und zwar in einem Schutzgasstrahl, der zur Auflockerung des abzusaugenden Pulvers dient. Dabei handelt es sich vorzugsweise um das gleiche Schutzgas, welches auch im Prozessraum 9 vorhanden ist. Der über die Gaszuführungsleitung 72 zugeführte Pulverauflockerungsschutzgasstrahl kann kontinuierlich während des Pulverabsaugvorgangs zugeführt werden. Alternativ kann auch eine intermittierende, stoßweise Zufuhr des Schutzgasstrahls zur Pulverauflockerung durchgeführt werden. Das während der Pulverabsaugung durch die Leitung 71 mitabgesaugte Schutzgas wird vorzugsweise gefiltert und in einem Schutzgaskreislauf dem Prozessraum 9 zugeführt, wobei die Leitung 72 vorzugsweise eine Bypass-Leitung einer Schutzgasumwälzanlage ist, die den Schutzgaskreislauf, in den der Prozessraum integriert ist, aufrechterhält.

Fig. 2c zeigt, wie der hergestellte Formkörper 23 nach Beendigung eines Absaugvorgangs und Wegbewegung der Substratplattentransporteinrichtung 69 von überschüssigem Pulver an seiner Außenseite weitestgehend befreit worden ist. In Fig. 2d ist die Bauplattform 13 in einem angehobenen Zustand gezeigt, wobei die Bauplattform so höhenverstellt ist, dass die Unterseite der obersten auf der Bauplattform gestapelten Substratplatten 25 im Wesentlichen auf der Höhe der Basisebene 51 des Prozessraumbodens 11 angeordnet ist. Somit kann, wie in Fig. 2e gezeigt, die Substratplattentransporteinrichtung in Form eines Substratplattenschiebers 69, mit im Wesentlichen auf der Höhe der Basisebene liegender Unterseite, die oberste der gestapelten Substratplatten 25 zusammen mit dem fertiggestellten Formkörper 23 von der Bauplattform wegschieben, ohne dabei die restlichen auf der Bauplattform 13 gestapelten Substratplatten 25 mitzubewegen. In Fig. 2f steht unmittelbar nach Wegbewegung der obersten Substratplatte mit Formkörper gemäß Fig. 2e die nächste Substratplatte 25 für den nächsten schichtweisen Aufbau eines Formkörpers 23 aus Werkstoffpulver frei. So kann der in Fig. 2a-2f beschriebene Vorgang unmittelbar wiederholt werden. Es kann auch für die Bewegung der Substratplattentransporteinrichtung bzw. des Substratplattenschiebers 69 ein gesteuerter mechanischer Antrieb bzw. pneumatischer oder/und elektromagnetischer oder/und hydraulischer Stellantrieb vorgesehen sein. Der mechanische Antrieb und die Pulverabsaugeinrichtung kann mit einer elektrischen Steuereinheit verbunden sein, die den in Fig. 2a-2f beschriebenen Herstellungsvorgang automatisch ablaufen lässt.

In Fig. 3 ist der Prozessraumbereich 9 der in Fig. 1 gezeigten SLM-Vorrichtung erkennbar, um den Blick auf ein Beispiel einer Pulverschichtenpräparierungseinrichtung 41 und Substratplattentransporteinrichtung 69 freizugeben. Die Pulverschichtenpräparierungseinrichtung 41 umfasst einen Glättungsschieber 43, welcher als ein Schwenkarm ausgebildet ist, der um eine vertikale Schwenkachse 45 hin- und herschwenkbar ist. Bei einer solchen Schwenkbewegung überstreicht der Glättungsschieber 43 die Bauplattform 13 im Prozessraumboden 11, um eine glatte Pulverschicht auf der Bauplattform 13 zu erzeugen. Das zugeführte Pulver wird durch eine Pulvereinlass-öffnung oder Pulvereinlassstelle 55 im Prozessraumboden 11 von unten her in den Prozessraum 9 eingebracht.

Nach der Zufuhr einer dosierten Menge Pulver in den Prozessraum 9 veranlasst die Steuerung der SLM-Vorrichtung den Glättungsschieber 43 dazu zu schwenken, so dass das dabei von der nachlaufenden Glättungsleiste 47 vorgeschobene Pulver zu der Bauplattform 13 gelangt. Die Bauplattform 13 ist zuvor um das Maß der gewünschten Pulverschichtdicke in ihrer Zylinderführung 33 abgesenkt worden. Da die Glättungsleiste 47 mit ihren Unterseiten auf der Basisebene 51 des Prozessraumbodens 11 liegt, wird beim Überstreichen der Bauplattform 13 somit eine geglättete Pulverschicht der gewünschten Dicke erzeugt. Der Glättungsschieber 43 fährt dann zurück in die Pulvernachfüllwartestellung (Umkehrstellung) und es kann der Bestrahlungsvorgang zur ortsselektiven Verfestigung der zuvor präparierten Pulverschicht beginnen.

Während des Bestrahlungsvorgangs kann bereits wieder eine nächste Pulverdosis durch die Pulvereinlassstelle 55 in den Prozessraum 9 für die Präparation der nächsten Pulverschicht auf der Bauplattform 13 gefördert werden. Das Pulver wird hierzu aus einem bei 57 angeschlossenen externen Vorratsbehälter der Pulvereinlasstelle 55 zugeführt, wobei ein unterhalb des Prozessraumbodens 11 verlaufender Pulverzuführungskanal die Pulvereinlassstelle 55 mit dem Vorratsbehälter verbindet. In dem Pulverzuführungskanal ist eine Förderschnecke drehbar aufgenommen, die von einem gesteuert betreibbaren Elektromotor 59 zur Drehung angetrieben wird, um das Pulver aus dem Vorratsbehälter heraus zur Pulvereinlasstelle 55 zwangszufördern.

Die Vorgänge der Pulverschichtenpräparierung auf der Bauplattform 13 und der orstsselektiven Verfestigung durch Bestrahlung des Pulvers wiederholen sich, bis der gewünschte Formkörper 23 fertiggestellt ist. Die Führung des Laserstrahls bei dessen Abtastbewegung über die Bauplattform 13 erfolgt in bekannter Weise nach Maßgabe von Geometriebeschreibungsdaten des Formkörpers jeweils betreffend die aktuell bestrahlte Schicht.

Die Substratplattentransporteinrichtung 69 stellt in dieser Ausführungsform einen Substratplattenschieber 69 mit einer Saugglocke 79 dar. Der Substratplattenschieber 69 weist einen bewegbar geführten Arm 89 mit einer vertikalen Rotationsachse 99 auf und kann so um die vertikale Rotationsachse 99 zwischen zwei Umkehrstellen mit in Draufsicht dazwischenliegender Bauplattform 13 hin- und herbewegt werden. Der geführte Arm kann durch einen gesteuert betreibbaren Elektromotor zur Drehung angetrieben werden. Durch die Möglichkeit der Hin- und Herbewegung kann der Prozessraumbodenbereich 11 für das Transportieren des fertiggestellten Formkörpers sehr klein und gut abgegrenzt gehalten werden. Die Unterseite des Substratplattenschiebers liegt im Wesentlichen auf der Höhe der Basisebene, um nach Fertigstellung des Formkörpers die oberste der gestapelten Substratplatten zusammen mit dem Formkörper von der Bauplattform wegzuschieben. Die Saugglocke 79 kann so im Prozessraum 9 über die Bauplattform bewegt werden. Die in Fig. 2b und 2c angedeuteten Absaug- und Gaszufuhrleitungen 71, 72 verlaufen bei dem Ausführungsbeispiel der Fig. 3 im Inneren des geführten Armes 89. Zum Absaugen kann eine Pumpe aktiviert werden, welche den erforderlichen Unterdruck in der Saugglocke erzeugt und das Pulver über die Absaugleitungen absaugt. Ein Schutzgasstrahl kann zur Auflockerung des abzusaugenden Pulvers verwendet werden.

Die Substratplattentransporteinrichtung 69 mit der Pulverabsaugglocke 79 wird gemäß Fig. 2b nach Fertigstellung des Formkörpers im Wesentlichen bündig mit der Basisebene 51 des Prozessraumbodens 11 über die Bauplattform 13 bewegt, um das den Formkörper 23 außen umgebende überschüssige Pulver abzusaugen. Die Substratplattentransporteinrichtung 69 mit der Pulverabsaugglocke 79 fährt dann zurück in die in Fig. 3 gezeigte Wartestellung. Es folgt durch gesteuertes Anheben der Bauplattform 13, dass die Unterseite der obersten auf der Bauplattform gestapelten Substratplatten 25 im Wesentlichen auf die Höhe der Basisebene 51 des Prozessraumbodens 11 eingestellt wird. Die oberste der gestapelten Substratplatten 25 zusammen mit dem fertiggestellten Formkörper 23 wird durch die nochmalige Rotationsbewegung der Substratplattentransporteinrichtung 69 von der Bauplattform weggeschoben, um so die nächste Substratplatte des Substratplattenstapels 25 für den nächsten schichtweisen Aufbau eines Formkörpers 23 aus Werkstoffpulver freizumachen. Die Substratplattentransporteinrichtung 69 kann durch Bewegung im Prozessraum 9 den fertiggestellten Formkörper 23 auf einer dafür vorgesehenen Zwischenlagerungsfläche der Basisebene 51 zwischenlagern oder alternativ in eine nicht dargestellte Schleuse hineinschieben, die dem Prozessraum 9 benachbart ist. Eine solche Schleuse kann zum Prozessraum 9 hin geöffnet und geschlossen werden und hat ferner eine Ausgangstür, die geöffnet werden kann, um z. B. einen fertiggestellten Formkörper 23 aus der Schleuse nach draußen hin zu entnehmen. Die Schleuse kann mit Schutzgas gespült werden, so dass beim Öffnen der Schleuse zum Prozessraum 9 hin sowohl im Prozessraum 9 als auch in der Schleuse Schutzgasatmosphäre herrschen. Das Herausschieben eines fertiggestellten Formkörpers 23 aus dem Prozessraum 9 heraus in die Schleuse erfordert daher nicht eine Aufhebung der Schutzgasatmosphäre im Prozessraum.

## Patentansprüche

1. Vorrichtung zur Herstellung von Formkörpern (23) durch schichtweises Aufbauen aus Werkstoffpulver durch ortsselektives Verfestigen des Pulvers zu zusammenhängenden Bereichen nach Maßgabe von Geometriebeschreibungsdaten des Formkörpers (23), umfassend einen Prozessraum (9) mit einem Prozessraumboden (11), der eine Basisebene (51) und eine relativ dazu mittels einer steuerbaren Antriebseinheit längs einer vertikalen Bauplattformachse (35) gesteuert höhenverstellbare Bauplattform (13) für den Formkörper (23) aufweist, mehrere aufeinander gestapelte Substratplatten, die auf der Bauplattform (13) angeordnet sind,
eine Pulverschichtenpräparierungseinrichtung zur Präparierung einer jeweiligen nachfolgend ortsselektiv zu verfestigenden Pulverschicht (21) auf der obersten der gestapelten Substratplatten,
eine Pulververfestigungseinrichtung, die zum ortsselektiven Verfestigen von Pulver der jeweils zuletzt auf der obersten der gestapelten Substratplatten präparierten Pulverschicht (21) aktivierbar ist, und
eine Substratplattentransporteinrichtung (69), die im Prozessraum (9) bewegbar ist, um nach Fertigstellung des Formkörpers (23) die oberste der gestapelten Substratplatten (25) zusammen mit dem Formkörper (23) von der Bauplattform (13) wegzubewegen.

2. Vorrichtung nach Anspruch 1, wobei die Substratplattentransporteinrichtung (69) einen Substratplattenschieber umfasst, der zwischen zwei Umkehrstellen hin- und herbewegbar ist.

3. Vorrichtung nach Anspruch 2, wobei die Unterseite des Substratplattenschiebers (69) im Wesentlichen auf der Höhe der Basisebene (51) liegt, um nach Fertigstellung des Formkörpers (23) die oberste der gestapelten Substratplatten (25) zusammen mit dem Formkörper von der Bauplattform (13) wegzuschieben.

4. Vorrichtung nach Anspruch 2 oder 3, wobei der Substratplattenschieber (69) einen bewegbar geführten Arm (89) mit einer vertikalen Rotationsachse (99) aufweist, wobei der Substratplattenschieber (69) um die vertikale Rotationsachse (99) bewegbar ist.

5. Vorrichtung nach einem der vorhergehenden Ansprüche, wobei die Bauplattform (13) so höhenverstellbar ist, dass die Unterseite der obersten auf der Bauplattform (13) gestapelten Substratplatten (25) im Wesentlichen auf der Höhe der Basisebene (51) des Prozessraumbodens (11) angeordnet ist.

6. Vorrichtung nach einem der vorhergehenden Ansprüche, wobei die Substratplattentransporteinrichtung (69) eine Pulverabsaugeinrichtung (79) zur Absaugung von überschüssigem Pulver von der obersten der gestapelten Substratplatten (25) aufweist.

7. Vorrichtung nach Anspruch 6, wobei die Pulverabsaugeinrichtung (79) eine Absaughaube, eine daran angeschlossene Absaugleitung (71) und eine Gaszuführungsleitung (72) zur Zuführung eines Pulverauflockerungsgases umfasst.

8. Vorrichtung nach Anspruch 6 oder 7, wobei die Vorrichtung eine Pulverauflockerungseinrichtung aufweist, um während der Absaugung durch die Pulverabsaugeinrichtung (79) das überschüssige Pulver auf der obersten der gestapelten Substratplatten (25) aufzulockern.

9. Vorrichtung nach Anspruch 8, wobei die Pulverauflockerungseinrichtung eine Vibrations-, Ultraschall- oder/und Gebläseeinrichtung umfasst.

10. Vorrichtung nach einem der vorhergehenden Ansprüche, wobei im Prozessraum (9) ein Vorrat an Substratplatten bereitliegt, wobei die Substratplattentransporteinrichtung (69) so bewegbar ist, dass eine oder mehrere Substratplatten aus dem Vorrat auf die Bauplattform (13) zubewegt wird.

11. Vorrichtung nach einem der vorhergehenden Ansprüche, wobei die Substratplattentransporteinrichtung (69) relativ zu dem Prozessraumboden (11) gesteuert höhenverstellbar ist.

12. Vorrichtung nach einem der vorhergehenden Ansprüche, wobei der Substratplattenschieber mindestens einen mechanischen Stellantrieb aufweist.
